# EUROPÄISCHE PATENTSCHRIFT

(11) **EP 2 971 718 B1**
(45) Veröffentlichungstag und Bekanntmachung des Hinweises auf die Patenterteilung: **14.06.2017**
(21) Anmeldenummer: 14707750.7
(22) Anmeldetag: 03.03.2014
(51) Int. Cl.: F02F 3/10, F16J 1/02

(54) **BESCHICHTETE KOLBEN UND VERFAHREN ZU IHRER HERSTELLUNG**
COATED PISTONS AND METHOD FOR THE PRODUCTION THEREOF
PISTON REVÊTU ET PROCÉDÉ DE FABRICATION DUDIT PISTON

(30) Priorität: 15.03.2013 DE 102013204577
(43) Veröffentlichungstag der Anmeldung: 20.01.2016
(73) Patentinhaber: Federal-Mogul Nürnberg GmbH, 90441 Nürnberg (DE)
(72) Erfinder: FUHRMANN,Thomas, 91207 Lauf/Pegnitz (DE); BLÜMM, Monika, 90537 Feucht (DE); DANNENFELDT, Margrit, 90480Nürnberg (DE); LEITZMANN, Dominik, 90459 Nürnberg (DE)
(74) Vertreter: Hoffmann Eitle
(86) Internationale Anmeldenummer: PCT/EP2014/054055
(87) Internationale Veröffentlichungsnummer: WO 2014/139816

(56) Entgegenhaltungen:
- DE-A1-102010 047 279
- US-A1- 2007 071 990
- US-A1- 2008 163 751
- US-A1- 2010 236 516

## Beschreibung

### Technisches Gebiet

Die Erfindung betrifft ein Verfahren zur Herstellung von Kolben, die mit einer Gleitschicht vorgesehen sind. Sowie ein Verfahren zur Verbesserung der tribologischen Eigenschaften zwischen dem Kolben und der Zylinderwand.

### Hintergrund der Erfindung

Die Reibleistung zwischen tribologischen Partnern wird maßgeblich durch die Mikrogeometrie beider Körper, welche sich gut durch den Parameter der Oberflächenrauhheit beschreiben lässt, bestimmt.

Bei dem System aus Kolben und Zylinderlaufbuchse sind die beiden Reibpartner anfangs häufig nicht optimal aufeinander abgestimmt, so dass die Reibwerte erhöht sind. Während der ersten, sogenannten Einlaufphase passen sich die beiden Bauteile aneinander an. Dabei findet eine Einglättung statt und die Reibwerte verringern sich.

Typischerweise wird bei Kolben am Schaft eine Beschichtung aufgebracht, um die Reibung gegenüber der Zylinderwand zu reduzieren. Eine solche Beschichtung (Gleitlack) umfasst üblicherweise eine Matrix, beispielsweise aus einem Polymer oder einer Polymermischung, in die Festschmierstoffe, wie beispielsweise Graphit oder Molybdändisulfid (MoS₂), eingebettet sind.

Solch eine Beschichtung wird z.B. in US 2010/236516 A1 beschrieben. Sie besteht aus einer Doppelschicht, wobei beide Schichten zumindest ein Bindemittel ausgewählt aus Polyamidimid, Polyimid und Epoxid enthalten. Die innere Schicht enthält 0 bis 50 Gew.-% Graphit und/oder MoS₂, während die äußere Schicht 50 bis 95 Gew.-% Graphit und/oder MoS₂ als Festschmierstoff(e) enthält.

Weiterhin ist es möglich, den Kolbenschaft mit zwei unterschiedlichen Beschichtungen zu versehen, z.B. mit einer unteren, verschleißbeständigen Lage, und einer oberen reibungsarmen Lage, welche primär als Einlaufschicht dient, d.h. als Schicht, die während der Einlaufphase des Kolbens allmählich abgetragen wird. So beschriebt die WO 2012/041769 einen Kolben für Verbrennungsmotoren mit einer Schaftbeschichtung aus einer verschleißbeständigen inneren Schicht aus einer Polymermatrix mit darin dispergierten Keramikpartikeln, Aramidfasern und/oder Kohlenstofffasern und einer äußeren Schicht aus einer Polymermatrix mit darin dispergierten Festschmierstoffen.

### Kurze Beschreibung der Zeichnung

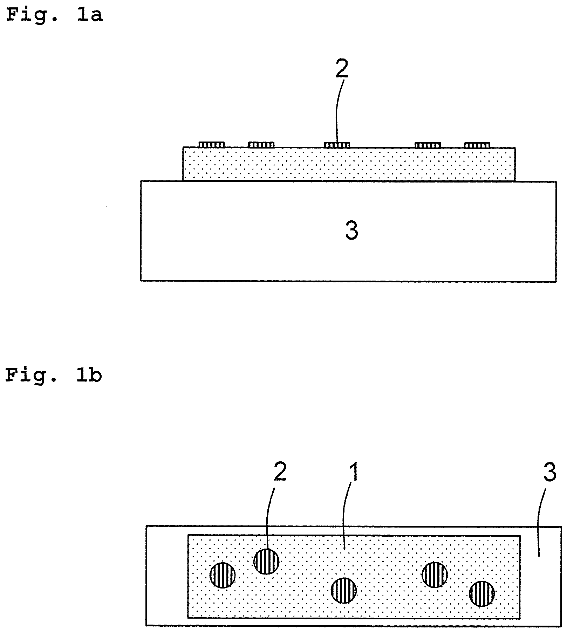

- Fig. 1: zeigt ein Schema der mit dem erfindungsgemäßen Verfahren hergestellten Gleitschicht.

### Darstellung der Erfindung

Ziel der vorliegenden Erfindung ist es, das Einlaufverhalten des Systems aus Kolben und Zylinderlaufbuchse während der Einlaufphase zu optimieren. Vorteilhafterweise wird während der Einlaufphase gleichzeitig das verwendete Motoröl mit fein verteilten Festschmierstoffpartikeln angereichert, da diese bezüglich der Reibleistung einen positiven Gesamteffekt auf alle ölversorgten Reibpartner im Motor haben.

Überraschend hat sich herausgestellt, dass sich die oben beschriebenen Ziele erreichen lassen, wenn auf den Kolben eine Gleitschicht aufgebracht wird, die eine Beschichtung mit einer vernetzten Matrix und unmittelbar auf diese Beschichtung aufgebrachte Festschmierstoffkonglomerate umfasst. Diese Festschmierstoffkonglomerate werden während der Einlaufphase des Kolbens zumindest teilweise abgetragen, so dass die Festschmierstoffpartikel zur Schmierung zur Verfügung stehen. Zur Herstellung dieser Gleitschicht werden im Anschluss an die Auftragung der Beschichtung Festschmierstoffpartikel unmittelbar auf die noch nicht vernetzte Beschichtung aufgebracht und die Beschichtung anschließend vernetzt.

Im Rahmen der vorliegenden Erfindung bezeichnet der Begriff "Festschmierstoffkonglomerat" eine räumlich abgegrenzte Ansammlung von Festschmierstoffpartikeln, die nicht in einer Polymermatrix dispergiert sind. Diese kann eine beliebige Form besitzen und z.B. in Form von Punkten, Vielecken, Linien oder ähnlichem ausgeführt sein.

Das erfindungsgemäße Verfahren zur Herstellung eines beschichteten Kolbens, insbesondere eines beschichteten Kolbens für Verbrennungsmotoren, umfasst die folgenden Schritte:
(1) das abschnittsweise Aufbringen einer Beschichtungszusammensetzung, umfassend eine vernetzbare Matrix, auf den Kolben, insbesondere den Kolbenschaft,
(2) das Aufbringen von Festschmierstoffpartikeln in Form von einer oder mehreren räumlich abgegrenzten Struktur(en) auf die noch unvernetzte Beschichtungszusammensetzung, und
(3) das Vernetzen der Matrix, um eine Gleitschicht zu erzeugen,
wobei die in Schnitt (2) aufgebrachten Festschmierstoffpartikel nicht in einer Polymermatrix dispergiert sind.

Eine schematische Darstellung der mit dem erfindungsgemäßen Verfahren hergestellten Gleitschicht ist in Fig. 1 gezeigt. Der dort gezeigte Kolben 3 weist eine Beschichtung 1 mit einer vernetzten Matrix auf. Unmittelbar auf die Beschichtung 1 sind Festschmierstoffkonglomerate 2 aufgebracht.

Im Rahmen der vorliegenden Erfindung können als Beschichtung, auf die die Festschmierstoffkonglomerate aufgebracht werden, alle üblicherweise für Kolben eingesetzten Gleitlacke verwendet werden. Solche Gleitlacke umfassen im nicht-ausgehärteten Zustand eine vernetzbare Matrix, die bevorzugt ein Polymer oder eine Mischung von Polymeren enthält. Der Gleitlack kann optional weitere Bestandteile enthalten, z.B. solche die das Reibverhalten positiv beeinflussen.

Erfindungsgemäß können als vernetzbare Matrix die üblichen Ausgangsstoffe für verschleißbeständige Kolbenbeschichtungen, wie beispielsweise Phenolharze, Epoxidharze, Polyamid, Polyamidimid und/oder PTFE eingesetzt werden, bevorzugt sind Phenolharze und/oder Epoxidharze.

In einer bevorzugten Ausführungsform der vorliegenden Erfindung umfasst die durch die Schritte (1) und (3) aufgebrachte Beschichtung (der Gleitlack) einen oder mehrere Festschmierstoffe. Als Festschmierstoffe werden bevorzugt Stoffe mit einer laminarartig kristallisierenden Struktur eingesetzt, wie beispielsweise Graphit, MoS₂, WS₂, α-BN. Ferner können Polymere, wie z.B. PTFE, eingesetzt werden. Erfindungsgemäß sind Graphit, MoS₂, WS₂, α-BN und Mischungen daraus besonders bevorzugt.

Der Gleitlack weist üblicherweise eine Schichtdicke von 5 bis 50 Mikrometern, bevorzugt von 10 bis 25 Mikrometern auf.

Geeignete Gleitlacke sind z.B. in der DE 10 2009 002 716 A1 beschrieben.

Bei der vorliegenden Erfindung werden auf diesen Gleitlack Festschmierstoffkonglomerate aufgebracht. Hierfür können die oben genannten Festschmierstoffe verwendet werden. Bevorzugt sind Graphit, MoS₂, WS₂, α-BN und Mischungen daraus. In einer insbesondere bevorzugten Ausführungsform der vorliegenden Erfindungen wird für die Festschmierstoffkonglomerate der Festschmierstoff verwendet, der auch in dem Gleitlack enthalten ist.

Die Größe der Festschmierstoffkonglomerate, die gemäß der Erfindung auf den Gleitlack aufgebracht werden, kann in einem weiten Bereich und zielgerichtet auf die spezielle Anwendung variiert werden und beträgt üblicherweise zwischen 0,001 und 1 cm². In einer bevorzugten Ausführungsform beträgt die Größe der Festschmierstoffkonglomerate 0,01 bis 0,1 cm².

Die Oberfläche des zu beschichtenden Kolbens bzw. Kolbenschafts kann erfindungsgemäß bevorzugt aus Aluminium, Stahl oder Legierungen von beiden Grundmaterialien bestehen, besonders bevorzugt aus Aluminium.

Zum Aufbringen der Beschichtungszusammensetzung und zum Vernetzen der Matrix können dem Fachmann geläufige Verfahren eingesetzt werden. Bevorzugt kommen für das Aufbringen der Beschichtungszusammensetzung Siebdruck- oder Sprühverfahren zum Einsatz. Das Vernetzen der Matrix kann thermisch oder mittels Strahlung, beispielsweise durch UV- oder IR-Strahlung, erfolgen.

Zum Aufbringen der Festschmierstoffpartikel wird bevorzugt eine Suspension des Festschmierstoffes bzw. der Festschmierstoffe in einem hochsiedenden Lösungsmittel, d.h. einem Lösungsmittel mit einem Siedepunkt von 100°C oder mehr, wie z.B. γ-Butyrolacton oder N-MethylPyrrolidon, verwendet.

Diese Suspension wird z.B. mit einem Bedruckungs- oder Sprühverfahren an den gewünschten Stellen aufgebracht, so dass die Festschmierstoffpartikel durch den anschließenden Vernetzungsprozess an der Oberfläche der Matrix und somit des Gleitlacks anhaften und die erfindungsgemäßen Festschmierstoffkonglomerate bilden. In der Regel führt das erfindungsgemäße Verfahren lediglich zu einem mechanischen Anhaften des Festschmierstoffs an dem Gleitlack, so dass die Festschmierstoffpartikel unmittelbar während des Einlaufvorgangs abgetragen werden und für tribologische Prozesse zur Verfügung stehen.

In einer besonders bevorzugten Ausführungsform werden die Festschmierstoffpartikel mittels des Tampondruckverfahrens aufgebracht. Das Tampondruckverfahren ermöglicht die gezielte und kostengünstige Aufbringung von räumlich sehr klar definierten Strukturen in kurzer Zeit. Dadurch ist es möglich, die Form, Größe und Anzahl der Festschmierstoffkonglomerate an den eingesetzten Kolben und dessen Einsatzgebiet anzupassen.

Ein weiterer Gegenstand der Erfindung ist ein Verfahren zur Verbesserung der tribologischen Eigenschaften zwischen Kolben und Zylinderwand.
Da die Festschmierstoffkonglomerate die unmittelbaren Kontaktpunkte des Kolbens an der Zylinderwand darstellen, finden hier erste tribologische Prozesse statt. Aufgrund der Anreicherung der Festschmierstoffpartikel an der Oberfläche kann bei der erfindungsgemäßen Gleitschicht die Reibung in der Einlaufphase signifikant gesenkt werden.

Auf diese Weise kann mittels der vorliegenden Erfindung die Reibung zwischen Kolben und Zylinderwand in der Phase des reibungsintensiven Einlaufverhaltens signifikant reduziert werden. Da bei der vorliegenden Erfindung die Festschmierstoffpartikel gezielt auf besonders belastete Stellen, wie beispielsweise auf der Längsachse des Kolbenschaftes, aufgebracht werden können, ermöglicht es die Erfindung die Reibung dort gezielt zu reduzieren.

Durch die relativ lose Verbindung mit der Matrix werden die Festschmierstoffpartikel während der Einlaufphase durch Abrieb und/oder Verschleiß nach und nach aus der Gleitschicht herausgelöst und in das umlaufende Motoröl abgegeben. So werden die folgenden Vorteile erreicht:
- Der Abtrag während des Motoreinlaufes führt zu einer sehr feinen und frühzeitigen Verteilung des Festschmierstoffs im Motor.
- Die höhere Festschmierstoffkonzentration im Öl unterstützt das Einlaufverhalten in allen beölten Bereichen des Motors.
- Durch die geringe Haftung an dem Gleitlack sind die Festschmierstoffpartikel sehr schnell verfügbar und es werden nicht wie beim Abtrag Gleitlacks zusätzliche Bestandteile, z.B. das Matrixpolymer, freigesetzt.

## Patentansprüche

1. Verfahren zur Herstellung eines beschichteten Kolbens, insbesondere eines beschichteten Kolbens für einen Verbrennungsmotor, umfassend die folgenden Schritte:
(1) das abschnittsweise Aufbringen einer Beschichtungszusammensetzung, umfassend eine vernetzbare Matrix, auf den Kolben, insbesondere den Kolbenschaft,
(2) das Aufbringen von Festschmierstoffpartikeln in Form von einer oder mehreren räumlich abgegrenzten Struktur(en) auf die noch unvernetzte Beschichtungszusammensetzung, und
(3) das Vernetzen der Matrix, um eine Gleitschicht zu erzeugen,
wobei die in Schritt (2) aufgebrachten Festschmierstoffpartikel nicht in einer Polymermatrix dispergiert sind.

2. Verfahren nach Anspruch 1, **dadurch gekennzeichnet, dass** die Festschmierstoffpartikel in Schritt (2) in Form einer Suspension in einem Lösungsmittel aufgebracht werden.

3. Verfahren nach Anspruch 1 oder 2, **dadurch gekennzeichnet, dass** die Festschmierstoffpartikel in Schritt (2) mit einem Tampondruckverfahren aufgebracht werden.

4. Verfahren nach einem der Ansprüche 1 bis 3, **dadurch gekennzeichnet, dass** die in Schritt (2) aufgebrachten Festschmierstoffpartikel aus Graphit, MoS₂, WS₂, α-BN und Mischungen daraus ausgewählt sind.

5. Verfahren nach einem der Ansprüche 1 bis 4, **dadurch gekennzeichnet, dass** in der in Schritt (1) aufgebrachten Beschichtungszusammensetzung als vernetzbare Matrix ein Phenolharz, ein Epoxidharz, Polyamid, Polyamidimid und/oder PTFE eingesetzt wird.

6. Verfahren nach Anspruch 5, **dadurch gekennzeichnet, dass** als vernetzbare Matrix ein Phenolharz und/oder ein Epoxidharz eingesetzt wird.

7. Verfahren nach einem der Ansprüche 1 bis 6, **dadurch gekennzeichnet, dass** die in Schritt (1) aufgebrachte Beschichtungszusammensetzung einen oder mehrere Festschmierstoff(e) umfasst.

8. Verfahren nach Anspruch 7, **dadurch gekennzeichnet, dass** die in Schritt (1) aufgebrachte Beschichtungszusammensetzung einen oder mehrere Festschmierstoff(e) ausgewählt aus Graphit, MoS₂, WS₂, α-BN und Mischungen daraus umfasst.

9. Verfahren nach einem der Ansprüche 1 bis 8, **dadurch gekennzeichnet, dass** die Größe der räumlich abgegrenzten Strukturen 0,001 bis 1 cm² beträgt.

10. Verfahren nach Anspruch 9, **dadurch gekennzeichnet, dass** die Größe 0,01 bis 0,1 cm² beträgt.

11. Verfahren zur Verbesserung der tribologischen Eigenschaften zwischen dem Kolben und der Zylinderwand, umfassend das Verfahren nach einem der Ansprüche 1 bis 10.

## Claims

1. Method for producing a coated piston, in particular a coated piston for an internal combustion engine, comprising the following steps:
(1) section-wise application of a coating composition, comprising a curable matrix, to the piston, in particular the piston shaft,
(2) application of solid lubricant particles in the form of one or more spatially delimited structure(s) to the still uncured coating composition, and
(3) curing the matrix in order to generate a sliding layer,
wherein the solid lubricant particles applied in step (2) are not dispersed in a polymer matrix.

2. Method according to claim 1, **characterised in that** the solid lubricant particles in step (2) are applied in the form of a suspension in a solvent.

3. Method according to claim 1 or 2, **characterised in that** the solid lubricant particles in step (2) are applied using a tampon printing method.

4. Method according to one of claims 1 to 3, **characterised in that** the solid lubricant particles applied in step (2) are selected from graphite, MoS₂, WS₂, α-BN and mixtures thereof.

5. Method according to one of claims 1 to 4, **characterised in that** a phenolic resin, an epoxy resin, polyamide, polyamide imide and/or PTFE is used in the coating composition applied in step (1) as the curable matrix.

6. Method according to claim 5, **characterised in that** a phenolic resin and/or an epoxy resin is used as the curable matrix.

7. Method according to one of claims 1 to 6, **characterised in that** the coating composition applied in step (1) comprises one or more solid lubricant(s).

8. Method according to claim 7, **characterised in that** the coating composition applied in step (1) comprises one or more solid lubricant(s) selected from graphite, MoS₂, WS₂, α-BN and mixtures thereof.

9. Method according to one of claims 1 to 8, **characterised in that** the size of the spatially delimited structures is 0.001 to 1 cm².

10. Method according to claim 9, **characterised in that** the size is 0.01 to 0.1 cm².

11. Method for improving the tribological properties between the piston and the cylinder wall, comprising the method according to one of claims 1 to 10.

## Revendications

1. Procédé de fabrication d'un piston revêtu, en particulier d'un piston revêtu destiné à un moteur à combustion interne, comprenant les étapes suivantes :
(1) l'application par endroits d'une composition de revêtement, comprenant une matrice réticulable, sur le piston, en particulier sur le corps de piston,
(2) l'application de particules de lubrifiant solide sous la forme d'une ou plusieurs structures délimitées dans l'espace sur la composition de revêtement encore non réticulée, et
(3) la réticulation de la matrice pour produire une couche de glissement, dans lequel les particules de lubrifiant solide appliquées à l'étape (2) ne sont pas dispersées dans une matrice polymère.

2. Procédé selon la revendication 1, **caractérisé en ce que** les particules de lubrifiant solide sont appliquées à l'étape (2) sous la forme d'une suspension dans un solvant.

3. Procédé selon la revendication 1 ou 2, **caractérisé en ce que** les particules de lubrifiant solide sont appliquées à l'étape (2) avec un procédé d'impression au tampon.

4. Procédé selon l'une quelconque des revendications 1 à 3, **caractérisé en ce que** les particules de lubrifiant solide appliquées à l'étape (2) sont choisies parmi les suivantes : graphite, MoS₂, WS₂, α-BN et leurs mélanges.

5. Procédé selon l'une quelconque des revendications 1 à 4, **caractérisé en ce que**, dans la composition de revêtement appliquée à l'étape (1), on utilise comme matrice réticulable une résine phénolique, une résine époxyde, un polyamide, un polyamide-imide et/ou du PTFE.

6. Procédé selon la revendication 5, **caractérisé en ce que** l'on utilise comme matrice réticulable une résine phénolique et/ou une résine époxyde.

7. Procédé selon l'une quelconque des revendications 1 à 6, **caractérisé en ce que** la composition de revêtement appliquée à l'étape (1) comprend un ou plusieurs lubrifiants solides.

8. Procédé selon la revendication 7, **caractérisé en ce que** la composition de revêtement appliquée à l'étape (1) comprend un ou plusieurs lubrifiants solides choisis parmi les suivants : graphite, MoS₂, WS₂, α-BN et leurs mélanges.

9. Procédé selon l'une quelconque des revendications 1 à 8, **caractérisé en ce que** la dimension des structures délimitées dans l'espace est comprise entre 0,001 et 1 cm².

10. Procédé selon la revendication 9, **caractérisé en ce que** la dimension est comprise entre 0,01 à 0,1 cm².

11. Procédé pour améliorer les propriétés tribologiques entre le piston et la paroi de cylindre, comprenant le procédé selon l'une quelconque des revendications 1 à 10.
